**Europäisches Patentamt**

**European Patent Office**

**Office européen des brevets**

(19)

(11) Veröffentlichungsnummer: **0 050 278**
**B1**

(12)

# EUROPÄISCHE PATENTSCHRIFT

(45) Veröffentlichungstag der Patentschrift:
**11.01.84**

(51) Int. Cl.³: **B 60 T 15/42**

(21) Anmeldenummer: **81108111.6**

(22) Anmeldetag: **09.10.81**

(54) Schnellbremsbeschleuniger.

(30) Priorität: **21.10.80 DE 3039686**

(43) Veröffentlichungstag der Anmeldung:
**28.04.82 Patentblatt 82/17**

(45) Bekanntmachung des Hinweises auf die Patenterteilung:
**11.01.84 Patentblatt 84/2**

(84) Benannte Vertragsstaaten:
**CH DE FR GB LI**

(56) Entgegenhaltungen:
**EP - A - 0 017 260**
**DE - A - 2 729 848**
**DE - A - 2 853 864**
**DE - B - 2 165 092**

(73) Patentinhaber: **Knorr-Bremse GmbH, Moosacher Strasse 80, D-8000 München 40 (DE)**

(72) Erfinder: **Huber, Johann, Ohlmüllserstrasse 14, D-8000 München 90 (DE)**

Schnellbremsbeschleuniger

Die Erfindung bezieht sich auf einen aus der DE-A-2 729 848 bekannten Schnellbremsbeschleuniger gemäß dem Oberbegriff des Anspruches 1.

Um bei langen Zügen bei Schnellbremsungen den Druck in der Hauptluftleitung möglichst schnell absenken zu können, damit die Bremskraftentwicklung möglichst gleichmäßig über den ganzen Zug ansteigt, werden die einzelnen Bremsen der Fahrzeuge mit Schnellbremsbeschleunigern der eingangs genannten Art ausgerüstet.

Das Ansprechen der Schnellbremsbeschleuniger wird vom Gradienten des Druckabbaues der Hauptluftleitung bestimmt. Das muß bei rein pneumatischer Steuerung so sein, damit bei normalen Bremsungen der Beschleuniger nicht anspricht. Aufgrund der damit verbundenen Funktionen bleibt der Beschleuniger nach der Druckabsenkung in der Hauptluftleitung noch geöffnet, bis auch der Druck in der Steuerkammer des Steuerkolbens abgebaut ist. Ohne diesen Druckabbau in der Steuerkammer kann der Steuerkolben nicht in seine Ausgangsstellung zurückgebracht werden, in der der Beschleuniger geschlossen und die Bremse gelöst ist.

Da es Betriebsfälle gibt, wo eine Schnellbremsung schnell wieder aufgehoben werden soll, z. B., wenn eine Schnellbremsung wegen eines nicht geöffneten Streckensignals eingeleitet wurde, dieses Signal aber unversehens doch in Öffnungsstellung geht, sind Einrichtungen bekannt, die den Druck in der Hauptluftleitung mit einem Behälter ausgleichen lassen. Solche Auffangbehälter sind sehr groß und müssen je nach dem Hauptluftleitungsvolumen der einzelnen Wagentypen auch besonders abgestimmt werden, um eine annähernd optimale Wirkung der Absenkung zu erreichen. Da der Druck im Behälter auch wieder abgebaut werden muß, der Beschleuniger aber zu diesem Zeitpunkt noch geöffnet ist, wird nach der Beschleunigerphase der Druck wirkungslos weiter abgebaut, und außerdem wird dann unnötigerweise Luft verbraucht, wenn bei noch nicht geschlossenem Entlüftungsventil die Bremsleitung erneut unter Druck gesetzt werden soll.

Aufgabe der Erfindung ist es daher, einen Schnellbremsbeschleuniger der eingangs genannten Art anzugeben, der den Druck in der Hauptluftleitung und ebenso in der Steuerkammer des Steuerkolbens im wesentlichen ganz abbaut, damit nach einer Schnellbremsung im wesentlichen keine Wartezeiten eingehalten werden müssen, während deren der Druck in der Steuerkammer des Steuerventils ganz abgebaut wird.

Die Aufgabe nach der Erfindung wird durch die kennzeichnenden Merkmale des Anspruches 1 gelöst. Vorteilhafte Ausführungen nach der Erfindung ergeben sich aus den Merkmalen der Ansprüche 2 und 3.

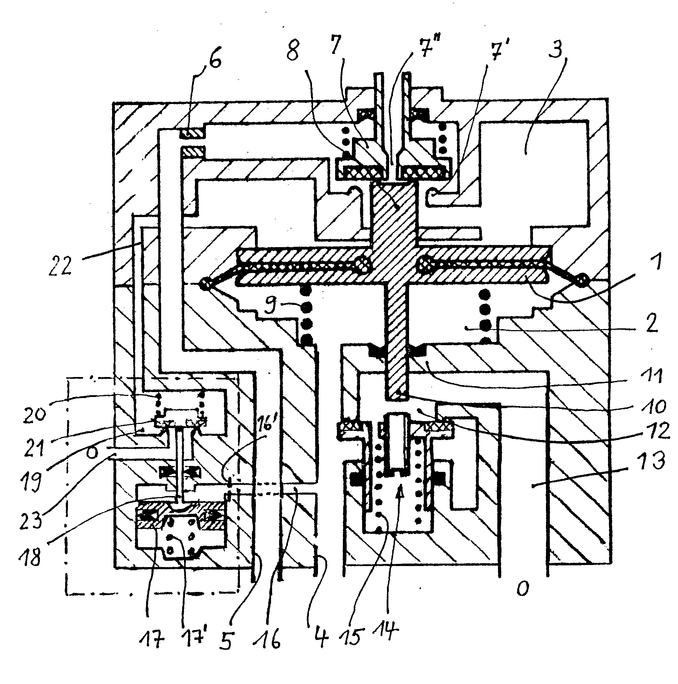

In der Zeichnung ist ein Ausführungsbeispiel eines erfindungsgemäßen Schnellbremsbeschleunigers schematisch dargestellt.

Ein als Membrankolben ausgebildeter Steuerkolben 1 unterteilt eine Gehäusekammer des Schnellbremsbeschleunigers in einen ersten Raum 2 und einen zweiten, weiterhin als Steuerkammer bezeichneten Raum 3. Der Raum 2 ist ungedrosselt über einen Gehäusekanal 4 an eine nicht weiter dargestellte Hauptluftleitung angeschlossen. Ein nicht gezeigter Vorratsbehälter ist über einen weiteren Gehäusekanal 5 und eine in diesen eingeschaltete Drossel 6 sowie ein nachgeschaltetes Ein-/Auslaßventil 7 an die Steuerkammer 3 angeschlossen. In der in der Zeichnung dargestellten einen Stellung des Steuerkolbens ist der Einlaß 7' des Ein-/Auslaßventils 7 geöffnet, so daß der an den nicht dargestellten Vorratsbehälter angeschlossene Kanal 5 über die Drossel 6 und den Einlaß 7' des Ein-/Auslaßventils 7 an die Steuerkammer 3 angeschlossen ist. Der Vorratsbehälter wird über nicht dargestellte Überwachventile in üblicher Weise aus der Hauptluftleitung mit Druckluft aufgeladen.

Zum Öffnen des Ein-/Auslaßventils 7 befindet sich an dem Steuerkolben 1 ein Ansatz 8, der an seiner freien Stirnseite als Ventilsitz ausgebildet ist. Das Ein-/Auslaßventil 7 besitzt eine zur Atmosphäre offene, zentrale Bohrung, die in eine Düse 7" ausläuft. In der dargestellten Stellung des Ein-/Auslaßventils 7 mit dem geöffneten Einlaß 7' ist der gedüste Auslaß 7" von dem Ansatz 8 des Steuerkolbens 1 abgesperrt.

In dem Raum 2 ist eine Feder 9 vorhanden, die gegen den Steuerkolben 2 drückt. Am Steuerkolben befindet sich ein Stößel 10, der durch eine Gehäusewand 11 druckdicht in einen Raum 12 hineinragt. Der Raum 12 ist an den Gehäusekanal 4 der Hauptluftleitung angeschlossen und ist über einen Gehäusekanal 13 an die Umgebung entlüftet. In dem Raum 12 befindet sich ein Beschleunigungsventil 14, das in seiner geschlossenen Stellung durch die Kraft einer Feder 15 gehalten ist, um dadurch den Gehäusekanal 4 und damit die Hauptluftleitung von dem Gehäusekanal 13 mit dem Zugang zur Atmosphäre abzusperren.

Befindet sich der Steuerkolben 1 entgegen der Kraft der Feder 9 in seiner der Zeichnung entgegengesetzten Stellung, dann ist das Bremsbeschleunigungsventil 14 über den Stößel 10 des Steuerkolbens 1 entgegen der Kraft der Feder 15 in die Öffnungsstellung gesteuert, um dadurch die Hauptluftleitung über die Kammer 12 und den Gehäusekanal 13 rasch zu entlüften.

Von dem Gehäusekanal 4 zweigt ein Kanal 16 zu einem Raum mit einem von einer Feder 17' belasteten Ventilkolben 17 ab, der mit einem Stößel 18 versehen ist, die druckdicht durch eine Gehäusewand in einen weiteren Raum 19 mit einem von einer Feder 20 belasteten Rückschlagventil 21 ragt. Der Raum 19 ist über einen Gehäusekanal 22 an die Steuerkammer 3 und über eine Auslaßöffnung 23 an die Atmosphäre angeschlossen. Bei geschlossenem Rückschlagventil 21 gemäß der Zeichnung ist die Steuerkammer 3 des Steuerkolbens 1 von der Entlüftung abgesperrt. Ist der Kolben 17 über den Kanal 16 nicht von einem Hauptluftleitungsdruck beaufschlagt, so wird er durch die relativ schwache Feder 17' in Öffnungsrichtung des Rückschlagventils 21, also in der Zeichnung nach oben verschoben, wobei er über den Stößel 18 das relativ großquerschnittige Rückschlagventil 21 in seine Öffnungsstellung steuert, um die Steuerkammer 3 über den Kanal 22, den Raum 19 und den Auslaß 23 rasch zu entlüften. In den von dem Gehäusekanal 4 abzweigenden Kanal 16 kann eine Drossel 16' eingesetzt sein.

Der Schnellbremsbeschleuniger arbeitet wie folgt:

Wie bekannt, wird das Schnellbremsbeschleunigungsventil 14 durch den Steuerkolben 1 nur dann in Öffnungsstellung gebracht, wenn bei einer Schnellbremsung der Druck in der Hauptluftleitung so rasch abgesenkt wird, daß sich eine genügend große Druckdifferenz zwischen der Steuerkammer 3 und der entgegengesetzten Kammer 2 ausbilden kann, bei der der Steuerkolben die Kraft seiner Feder 9 überwindet.

Indem der Steuerkolben 1 in Öffnungsrichtung des Bremsbeschleunigungsventiles in der Zeichnung nach unten bewegt wird, schließt der Einlaß 7' des Ein-/Auslaßventils. Anschließend öffnet sich der Auslaß 7'' des Ein-/Auslaßventils, so daß die Steuerkammer 3 über die geöffnete Düse 7'' an Atmosphäre angeschlossen ist.

Bei genügend raschem Druckabfall in der Hauptluftleitung vermag der Druck in der Steuerkammer 3, der jetzt von dem Gehäusekanal 5 getrennt ist, über die Düse 7'' nicht so rasch zu entlüften, so daß der Steuerkolben 1 weiter nach unten geschoben wird, bis er über seine Stange 10 das Beschleunigungsventil 14 öffnet, wodurch der Druck in der Hauptluftleitung rasch auf Null abgesenkt wird.

Im gleichen Maße wie der Druck in der Hauptluftleitung sinkt auch der Druck in dem Raum oberhalb des Ventilkolbens 17. Die Folge ist, daß bei einer Druckabsenkung der Hauptluftleitung auf annähernd den Wert Null die relativ schwache Feder 17' den Kolben 17 in der Zeichnung nach oben verschiebt, um über den Stößel 18 das Rückschlagventil 21 zu öffnen, wodurch die Steuerkammer 3 über den relativ großen Querschnitt des Rückschlagventils 21 rasch zur Atmosphäre entlüftet wird.

Sollte kurzzeitig nach der Einleitung einer Schnellbremsung die Bremse wieder gelöst werden, dann wird der Druck in der Hauptluftleitung und damit auch in der Kammer 2 erhöht, und der Steuerkolben kann in seiner Ausgangslage nach oben zurückgeführt werden, weil die Steuerkammer 3 vorher entlüftet worden ist. Das Beschleunigungsventil 14 wird wieder geschlossen, und der Auslaß 7'' des Ein-/Auslaßventils wird geschlossen. Anschließend wird der Einlaß 7' des Ein-/Auslaßventils geöffnet, so daß die Ausgangssituation des Schnellbremsbeschleunigers in wesentlich kürzerer Zeit als beim Stand der Technik wieder hergestellt und damit die Bremse vollständig gelöst ist.

In dem Maße, wie der Druck in der Hauptluftleitung erhöht wird, wird außerdem der Kolben 17 entgegen der Kraft der schwachen Feder nach unten gedrückt, wodurch der Stößel 18 das Rückschlagventil 21 wieder freigibt, so daß dieses unter der Kraft seiner Feder 20 in die Schließstellung geht, um dadurch die Steuerkammer 3 von der Entlüftung abzuschließen.

In den Kanal 16 ist vor den Kolben 17 die Drossel 16' bzw. eine Düse geschaltet, um zu verhindern, daß das Beschleunigungsventil 14 schon geschlossen wird, ehe die Druckabsenkung über den Zug ausreichend weit fortgeschritten ist.

## Patentansprüche

1. Schnellbremsbeschleuniger für indirekt wirkende Druckluftbremsen von Schienenfahrzeugen mit einem Steuerkolben (1) zur Steuerung eines in eine Entlüftung der Hauptluftleitung (4) eingeschalteten Beschleunigungsventils (14), wobei der Steuerkolben (1) einerseits in Schließrichtung des Beschleunigungsventils ungedrosselt vom Druck der Hauptluftleitung und andererseits von einem Steuerdruck in einer Steuerkammer (3) beaufschlagt ist, die über eine Drosselstelle (6) an die Hauptluftleitung (4) oder an einen von der Hauptluftleitung gespeisten Vorratsbehälter angeschlossen ist, dadurch gekennzeichnet, daß ein vom Hauptluftleitungsdruck gesteuertes Ventil (17, 18, 21) in eine Entlüftung der Steuerkammer (3) eingeschaltet ist.

2. Schnellbremsbeschleuniger nach Anspruch 1, dadurch gekennzeichnet, daß das Ventil einen Ventilkolben (17) aufweist, der über einen Stößel (18) eine Ventilplatte (21) über einem Ventilsitz in der Entlüftung der Steuerkammer (3) steuert, wobei der Ventilkolben (17) einerseits in Schließrichtung der Ventilplatte (21) vom Druck der Hauptluftleitung und andererseits in Öffnungsrichtung der Ventilplatte (21) von einer Feder (17') beaufschlagt ist.

3. Schnellbremsbeschleuniger nach Anspruch 1 oder 2, dadurch gekennzeichnet, daß dem von der Hauptluftleitung (4) gesteuerten Ventil (17, 18, 21) eine Düse (16') vorgeschaltet ist.

## Claims

1. Quick-acting brake activator for indirectly-operating pneumatic brakes of rail vehicles, having a piston valve (1) for actuating an activation valve (14) connected in a vent of the main air line (4), the piston valve (1) being on the one hand de-throttled in the closing direction of the activation valve by the pressure of the main air line and on the other hand acted upon by a control pressure in a control chamber (3) which is connected via a restrictor (6) to the main air line (4) or to a reservoir supplied from the main air line, characterised in that a valve (17, 18, 21) controlled by the main air line pressure is connected in a vent of the control chamber (3).

2. Quick-acting brake activator according to claim 1, characterised in that the valve has a valve piston (17) which, via a tappet (18), actuates a valve plate (21) over a valve seat in the vent of the control chamber (3), the valve piston (17) being acted upon on the one hand in the closing direction of the valve plate (21) by the pressure of the main air line and on the other hand in the opening direction of the valve plate (21) by a spring (17').

3. Quick-acting brake activator according to claim 1 or 2, characterised in that a nozzle (16') is connected before the valve (17, 18, 21) controlled by the main air line (4).

**Revendications**

1. Accélérateur de freinage rapide pour freins à air comprimé à action indirecte de véhicules sur rails, comportant un piston de commande (1) servant à commander une valve d'accélération (14) montée dans un système de mise à l'atmosphère de la conduite d'air principale (4), le piston de commande (1) étant chargé sans étranglement par la pression de la conduite d'air principale, dans le sens de fermeture de la valve d'accélération, et d'autre part, par une pression de commande régnant dans une chambre de commande (3), qui est raccordée par l'intermédiaire d'un étranglement (6) à la conduite d'air principale (7) ou à un réservoir alimenté par la conduite d'air principale, caractérisé par la conduite d'air principale, caractérisé par le fait qu'une valve (17, 18, 21) commandée par la pression de la conduite d'air principale est montée dans un système de mise à l'atmosphère de la chambre de commande (3).

2. Accélérateur de freinage rapide suivant la revendication 1, caractérisé par le fait que la valve comporte un piston (17) qui commande, par l'intermédiaire d'un poussoir (18), un plateau de valve (21) au-dessus d'un siège de valve dans le système de mise à l'atmosphère de la chambre de commande (3), le piston (17) de la valve étant chargé d'une part dans le sens de la fermeture du plateau (21) de la valve, par la pression de la conduite d'air principale et d'autre part dans le sens de l'ouverture du plateau (21) de la valve, par un ressort (17').

3. Accélérateur de freinage rapide suivant la revendication 1 ou 2, caractérisé par le fait qu'une buse (16') est branchée en amont de la valve (17, 18, 21) commandée par la conduite d'air principale (4).